# EUROPÄISCHE PATENTSCHRIFT

(11) **EP 2 688 934 B1**
(45) Veröffentlichungstag und Bekanntmachung des Hinweises auf die Patenterteilung: **02.10.2019**
(21) Anmeldenummer: 12710498.2
(22) Anmeldetag: 21.03.2012
(51) Int. Cl.: C08G 18/79, C08G 18/48, C08J 5/24

(54) **LAGERSTABILE POLYURETHAN-PREPREGS UND DARAUS HERGESTELLTE FORMKÖRPER AUS POLYURETHANZUSAMMENSETZUNG MIT FLÜSSIGEN HARZKOMPONENTEN**
STORAGE-STABLE POLYURETHANE PREPREGS AND MOLDED PARTS PRODUCED THEREFROM MADE OF POLYURETHANE COMPOSITION HAVING LIQUID RESIN COMPONENTS
PRÉ-IMPRÉGNÉS DE POLYURÉTHANE STABLES AU STOCKAGE ET CORPS MOULÉS PRÉPARÉS À PARTIR DESDITS PRÉ-IMPRÉGNÉS À BASE D'UNE COMPOSITION DE POLYURÉTHANE CONTENANT DES COMPOSANTS EN RÉSINE LIQUIDES

(30) Priorität: 25.03.2011 DE 102011006163
(43) Veröffentlichungstag der Anmeldung: 29.01.2014
(73) Patentinhaber: Evonik Degussa GmbH, 45128 Essen (DE)
(72) Erfinder: SPYROU, Emmanouil, 46514 Schermbeck (DE); SCHMIDT, Friedrich Georg, 45721 Haltern am See (DE); LANGKABEL, Eike, 41844 Wegberg (DE); CIELASZYK, Katharina, 45770 Marl (DE); REEMERS, Sandra, 48151 Münster (DE); LOESCH, Holger, 44627 Herne (DE); GOLLAN, Elke, 44653 Herne (DE); GRAMMENOS, Marina, 40476 Düsseldorf (DE)
(74) Vertreter: Evonik Patent Association
(86) Internationale Anmeldenummer: PCT/EP2012/054938
(87) Internationale Veröffentlichungsnummer: WO 2012/130672

(56) Entgegenhaltungen:
- EP-A1- 1 413 612
- EP-A2- 0 578 974
- DE-A1- 2 407 923
- DE-A1- 2 430 426
- DE-A1- 3 000 940
- DE-A1- 3 148 358
- FR-A1- 2 544 322
- JP-A- 11 060 677

## Beschreibung

Die Erfindung betrifft lagerstabile Polyurethan-Prepregs und daraus hergestellte Formkörper aus Polyurethanzusammensetzungen mit flüssigen Harzkomponenten, bevorzugt flüssigen Polyolen.

Die Polyurethanzusammensetzungen mit flüssigen Harzkomponenten, bevorzugt flüssigen Polyolen, sind insbesondere geeignet für die Herstellung von lagerstabilen Polyurethan-Prepregs und daraus hergestellte Formkörper (Composite-Bauteile). Die lagerstabilen Polyurethan-Prepregs sind erhältlich durch ein Verfahren mittels Imprägnierung in Form von Geweben und Gelegen unter Verwendung von diesen reaktiven Polyurethanzusammensetzungen

Verschiedene Formgebungsprozesse, wie z. B. das Reaction-Transfer-Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Formgeometrien angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-lay-up Technologie eingesetzt.

Industrielle Anwender solcher Systeme verlangen neben schnelleren Zykluszeiten und höheren Lagerstabilitäten auch bei Raumtemperatur auch eine Möglichkeit die Prepregs zuzuschneiden, ohne dass bei automatisiertem Zuschnitt und Lay-up der einzelnen Prepreg-Lagen die Schneidwerkzeuge mit der häufig klebrigen Matrixmaterial verunreinigt werden.

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt.

Polyurethan-Composites weisen auch gegenüber Vinylestern, ungesättigten Polyesterharzen (UPE) oder UPE-Urethan-Hybrid-Harzen eine überlegene Zähigkeit auf.

Prepregs und daraus hergestellte Composites auf der Basis von Epoxy-Systemen werden zum Beispiel beschrieben in WO 98/50211, US 4,992,228, US 5,080,857, US 5,427,725, GB 2007676, GB 2182074, EP 309 221, EP 297 674, WO 89/04335, US 5,532,296 und US 4,377,657, US 4,757,120.

In WO 2006/043019 wird ein Verfahren zur Herstellung von Prepregs auf der Basis von Epoxidharz-Polyurethanpulvern beschrieben.

Des Weiteren sind Prepregs auf der Basis von pulverförmigen Thermoplasten als Matrix bekannt.

In US 2004/0231598 wird eine Methode beschrieben, bei der die Partikel über eine spezielle Beschleunigungskammer mit elektrostatischer Aufladung geführt werden. Diese Apparatur dient zur Beschichtung von Glas-, Aramid- oder Kohlefaser-Substraten für die Herstellung von Prepregs aus thermoplastischen Harzen. Als Harze werden Polyethylen (PE), Polypropylen (PP), Polyetheretherketon (PEEK), Polyethersulfon (PES), Polyphenylsulfon (PPS), Polyimid (PI), Polyamid (PA), Polycarbonat (PC), Polyethylenterephthalat (PET), Polyurethan (PU), Polyester und Fluorpolymere genannt. Die daraus hergestellten thermoplastischen Prepreg-Textilien zeigen inherente Zähigkeit, ein gutes viscoelastische Dämpfungsverhalten, eine unbegrenzte Lagerfähigkeit, gute Chemikalienbeständigkeit und Recyclierbarkeit.

In der WO 98/31535 wird eine Methode zur Pulverimprägnierung beschrieben, bei der die zu imprägnierenden Glas- oder Kohlefaserstränge mit einer Partikel/Flüssigkeits- bzw. Partikel/Gas-Mischung in einem definierten Geschwindigkeitsprofil beaufschlagt werden. Dabei bestehen die Pulver aus keramischen bzw. thermoplastischen Materialien, unter anderem thermoplastisches Polyurethan.

In WO 99/64216 werden Prepregs und Composite und eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0590702 werden Pulverimprägnierungen zur Herstellung von Prepregs beschrieben, bei denen das Pulver aus einem Gemisch aus einem Themoplasten und einem reaktiven Monomer bzw. Prepolymeren besteht. Die WO 2005/091715 beschreibt ebenfalls die Verwendung von Thermoplasten zur Herstellung von Prepregs.

Michaeli et al. beschreibt die Entwicklung einer Pulvertechnologie für einen Pultrusionsprozess mit Thermoplastischen Polyurethanen, TPU genannt, in Coatings & Composite Materials , Nr.19, p37 - 39, 1997. Weiterhin werden in dem Artikel Processing and properties of thermoplastic polyurethane prepreg. (Ma, C. C. M.; Chiang, C. L. Annual Technical Conference - Society of Plastics Engineers (1991), 49th 2065-9.) Thermoplastische Polyurethan (TPU) Prepregs auf Basis von Lösemitteln und Wasser enthaltenden TPU-Systemen offenbart.

Prepregs mit einer Matrix auf der Basis von 2-Komponenten-Polyurethanen (2-K-PUR) sind bekannt.
Die Kategorie der 2-K-PUR umfasst im Wesentlichen die klassischen reaktiven PolyurethanHarz-Systeme. Prinzipiell handelt es sich um ein System aus zwei getrennten Komponenten. Während der maßgebende Bestandteil der einen Komponente immer ein Polyisocyanat ist, sind dies bei der zweiten Polyole bzw. bei neueren Entwicklungen auch Amino- oder Amin-Polyol-Gemische. Beide Teile werden erst kurz vor der Verarbeitung miteinander vermischt. Danach erfolgt die chemische Aushärtung durch Polyadition unter Bildung eines Netzwerkes aus Polyurethan bzw. Polyharnstoff. 2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalysierung, Konzentration, Löslichkeit, Feuchtegehalt, NCO/OH-Verhältnis und Umgebungstemperatur sind die wichtigsten [Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil.

Im Folgenden folgt eine Beschreibung der Polyurethan-Prepregs bzw. -Composite auf der Basis von 2-K-PUR-Systemen. In dem Artikel von K.Recker wird über die Entwicklung eines 2-KPolyurethansystems für das Harzmattenverfahren unter besonderer Berücksichtigung der Verarbeitungseigenschaften für SMC-Bauteile berichtet. (Baypreg - ein neuer POLYURETHAN-Werkstoff für das Harzmattenverfahren , Recker, Klaus, Kunststoffe-Plastics 8,1981).

Die WO 2005/049301 offenbart ein katalytisch aktiviertes 2-K-PUR-System, wobei die Polyisocyanat-Komponente und das Polyol gemischt werden und mittels Pultrusion zu einem Composite verarbeitet werden.

In der WO 2005/106155 werden faserverstärkte Composites für die Bau-Industrie offenbart, die mittels der Long-Fiber-Injection (LFI) Technologie mit 2-KPolyurethan-Systemen hergestellt werden.

In der JP 2004196851 werden Composites beschrieben, die aus Carbonfasern und organischen Fasern, wie z. B. Hanf, unter Verwendung einer Matrix aus 2-K-PUR auf der Basis von polymeren Methylendiphenyldiisocyanat (MDI) und speziellen OH-Gruppen haltigen Verbindungen hergestellt werden.

Die EP 1 319 503 beschreibt Polyurethan-Composites, wobei spezielle Polyurethan-Deckschichten für ein mit einem 2K-PUR-Harz getränktes Faser-Laminat, das eine Kernschicht (z. B. eine Papierwabe) umhüllt, verwendet werden. Das 2K-PUR-Harz besteht z. B. aus MDI und einer Mischung aus Polypropylentriolen und Diolen von Ethylenoxid-Propylenoxid-Copolymeren.

In der WO 2003/101719 werden Polyurethanbasierte Composites und die Methoden zur Herstellung beschrieben. Es handelt sich um 2-K-Polyurethanharze mit definierten Viskositäten und bestimmten Gelzeiten.

2-K-PUR-Systeme werden ebenfalls abgehandelt in: "Fiber reinforced polyurethane composites: shock tolerant components with particular emphasis on armor plating" (Ratcliffe, Colin P.; Crane, Roger M.; Santiago, Armando L., AMD (1995), 211 (Innovative Processing and Characterization of Composite Materials), 29-37.) und in Fiber-reinforced polyurethane composites. I. Process feasibility and morphology. (Ma, Chen Chi M.; Chen, Chin Hsing. International SAMPE Symposium and Exhibition (1992), 37 (Mater. Work. You 21st Century), 1062-74.)

Von der unterschiedlichen Bindemittelbasis abgesehen entsprechen feuchtigkeitshärtende Lacke sowohl in ihrer Zusammensetzung als auch in ihren Eigenschaften weitgehend analogen 2K-Systemen. Es werden im Prinzip die gleichen Lösemittel, Pigmente, Füllstoffe und Hilfsmittel verwendet. Anders als 2K-Lacke tolerieren diese Systeme vor ihrer Applikation aus Stabilitätsgründen keinerlei Feuchtigkeit.

Bekannt sind auch physikalisch trocknende Systeme auf der Basis von nichtreaktiven PUR-Elastomeren. Es handelt sich hierbei um höhermolekulare, lineare, thermoplastische Urethane aus Diolen und Diisocyanaten, vorzugsweise MDI, TDI, HDI und IPDI. Solche thermoplastischen Systeme weisen in der Regel sehr hohe Viskositäten und damit auch sehr hohe Verarbeitungstemperaturen auf. Dies erschwert den Einsatz für Prepregs maßgeblich. Bei der Herstellung von Prepregs mit Faserverbunden ist der Einsatz von Pulvern bei reaktiven Systemen eher unüblich und beschränkt sich bislang auf wenige Einsatzgebiete. Das wohl gängigste Verfahren, um ein Pulver auf eine Faseroberfläche zu bringen, ist das Wirbelbettverfahren (fluidized bed impregnation). Durch eine aufwärts gerichtete Strömung werden Pulverpartikel in einen Zustand versetzt, in dem sie fluid-ähnliche Eigenschaften aufweisen. Dieses Verfahren wird in der EP 590 702 angewandt. Dabei werden die Stränge einzelner Faserbündel auseinander geflochten und im Wirbelbett mit dem Pulver beschichtet. Das Pulver besteht dabei aus einer Mischung aus reaktivem und thermoplastischem Pulver, um so die Eigenschaften der Matrix zu optimieren. Einzelne Rovings (Faserbündel) werden schließlich zusammengelegt und mehrere Lagen bei einem Druck von 16 bar für etwa 20 Minuten verpresst. Die Temperaturen variieren zwischen 250 und 350 °C. Häufig kommt es allerdings beim Wirbelbettverfahren zu unregelmäßiger Beschichtung, insbesondere wenn die Stränge nicht auseinander gezogen werden.

Diesbezüglich wird in der US 20040231598 eine Methode vorgestellt, die ähnlich dem Wirbelbettverfahren funktioniert. Dabei transportiert ein Luftstrom die Partikel zum Substrat und es erfolgt durch einen speziellen Aufbau eine gleichmäßige Abscheidung des Pulvers.

Ein weiteres Verfahren beschreibt die, US 20050215148. Dort werden mit der eben erwähnten Vorrichtung gleichmäßige Verteilungen des Pulvers auf der Faser erreicht. Die Partikelgröße reicht dabei von 1 bis 2000 µm. Beschichtet wird bei mehreren Versuchen von einer oder von zwei Seiten. Durch die gleichmäßige Aufbringung des Pulvers werden nach einem anschließenden Verpressen der Prepregs Laminate ohne Lufteinschlüsse erzeugt.

Eine weitere Anmeldung, WO 2006/043019 beschreibt die Anwendung von epoxy- und amino-terminierten Harzen in Pulverform. Dabei werden die Pulver vermischt und auf die Fasern gegeben. Anschließend werden die Partikel angesintert. Die Partikelgröße liegt zwischen 1 und 3000 µm, vorzugsweise aber zwischen 1 und150 µm.

Diese Einschränkung der Partikelgröße auf eher kleine Durchmesser wird auch in einer Studie der Michigan State University empfohlen. Dabei ist die Theorie, dass Partikel mit kleinen Durchmessern eher in Hohlräume zwischen einzelnen Filamenten eindringen können als Partikel mit großen Durchmessern (S. Padaki, L.T. Drzal: a simulation study on the effects of particle size on the consolidation of polymer powder impregnated tapes, Department of Chemical Engineering, Michigan State University, Composites: Part A (1999), pp. 325-337).

Neben der Prepregtechnik werden auch in anderen klassischen Verfahren reaktive Pulver-Systeme eingesetzt, so beispielsweise in der Wickeltechnik [M.N. Ghasemi Nejhad, K.M. Ikeda: Design, manufacture and characterization of composites using on-line recycled thermoplastic powder impregnation of fibres and in-situ filament winding, Department of Mechanical Engineering, University of Hawaii at Manoa, Journal of Thermoplastic Composite Materials, Vol 11, pp. 533-572, November 1998] oder beim Pultrusionsverfahren. Für das Pultrusionsverfahren werden beispielsweise Faserseile (Towpregs) mit dem Pulver beschichtet und zunächst als sogenannte Towpregs aufgewickelt und gelagert. Eine Möglichkeit zur Herstellung ist in einem Artikel des SAMPE Journal's beschrieben [R.E. Allred, S. P. Wesson, D. A. Babow: powder impregnation studies for high temperature towpregs, Adherent Technologies, SAMPE Journal, Vol. 40, No. 6, pp. 40-48, November/ December 2004]. In einer weiteren Untersuchung wurden solche Towpregs durch das Pultrusionsverfahren zusammen gepresst und ausgehärtet zu Werkstoffbauteilen [N.C. Parasnis, K. Ramani, H.M. Borgaonkar: Ribbonizing of electrostatic powder spray impregnated thermoplastic tows by pultrusion, School of Mechanical Engineering, Purdue University, composites, Part A, Applied science and manufacturing, Vol. 27, pp. 567-574, 1996]. Obwohl die Herstellung von Towpregs und anschließende Verpressung im Pultrusionsverfahren bereits mit duroplastischen Systemen durchgeführt wurde, werden bei diesem Verfahren bislang größtenteils nur thermoplastische Systeme eingesetzt.

In DE 102009001793.3 und DE 102009001806.9 wird ein Verfahren zur Herstellung von lagerstabilen Prepregs, im Wesentlichen aufgebaut aus A) mindestens einem Faser förmigen Träger und B) mindestens einer reaktiven pulverförmigen Polyurethanzusammensetzung als Matrixmaterial beschrieben.

Die Aufgabe war es, ein einfacheres Verfahren zur Herstellung von problemlos zu handhabenden, das heißt nicht toxischen, polyurethanbasierenden Prepreg-Systemen auf der Basis von Polyurethanzusammensetzungen zu finden. Weitere Aufgabe dieser Erfindung war es, Prepregs mit Polyurethan-Matrixmaterial zu finden, welche mit einem einfachen Verfahren hergestellt werden können, wobei das Hauptaugenmerk auf das Handling und die Lagerungsfähigkeit der Prepregs gelegt werden sollte.
Für die Herstellung der Prepregs wäre es vorteilhaft, wenn die Viskosität von Zubereitungen der unvernetzten Matrixmaterialien gering genug ist, um bei der Herstellung des Composite-Bauteils eine Benetzung des Faser förmigen Trägers mit ausreichendem Faservolumenanteil zu gewährleisten, wobei auch eine Thixotropie vorteilhaft sein kann, damit ein Abfließen des Harzes in senkrechten Bauteilsegmenten verhindert werden kann.

Durch die Wahl geeigneter Ausgangsstoffe zur Herstellung der Matrixmaterialien sollte eine genügend lange Verarbeitungszeit (abhängig von der jeweiligen Anwendung bei der Herstellung der Composite) zwischen dem Aufschmelzen des nicht ausreagierten Matrixmaterials und der Vollendung der Reaktion gewährleistet werden.

Lagerstabile Polyurethan-Prepregs und daraus hergestellte Formkörper sind aus der DE 102009001793 und der DE 102009001806 bekannt.
Gegenstand von DE 102010029355.5 ist der Schmelzauftrag von Polyurethanprepreg-Systemen
In DE 102010030233.3 werden mäandrienrende Polyurethanprepreg-Systeme beschrieben. Die DE 102010030234.1 führt lösemittelhaltige Polyurethanprepreg-Systeme auf. DE 102010041239.2 beansprucht farbige Polyurethanprepreg-Systeme. DE 102010041256.2 wiederum handelt von Polyurethanprepreg-Systeme an fixierten Folien während die DE 102010041243.0 Polyurethanprepreg-Systeme mit einem Faservolumenanteil von weniger als 50 % beschreibt.
Allen diesen Dokumenten ist gemein, dass die dort beschriebenen Harzkomponenten (Polymere b) Festharzcharakter haben müssen, das heißt einen Glasübergangspunkt (Tg) von mindestens 40 °C. Dieser hohe Tg wurde bislang als notwendig erachtet, die Lagerstabilität des Prepregs zu gewährleisten.

Überraschend wurde nun gefunden, dass diese beschriebenen Anwendungen im Bereich der imprägnierten, reaktiven und lagerstabilen Polyurethan-Prepregs besonders vorteilhaft verwirklicht werden können, wenn dabei flüssige Harzkomponente, bevorzugt Polyole als Harzkomponente verwendet werden. Der verarbeitungstechnische Vorteil offenbart sich dabei sowohl bei der Herstellung der Prepregs als auch bei der anschließenden Verpressung zu Compositbauteilen im Sinne einer einfacheren Verarbeitbarkeit, ohne dass die Lagerstabilität des Prepregs darunter leidet. Insbesondere verläuft die Herstellung der Prepregs ohne unerwünschte Blasenbildung oder sonstiger Oberflächenstörungen. Bei der nachfolgenden Verpressung zu Compositen führen die flüssigen Harzkomponenten zu einem verbesserten Verlauf innerhalb der Schichten und damit zu überlegenen Materialeigenschaften.
Zudem kann durch die meist niedrigere Viskosität des Matrixmaterials bei höheren Temperaturen das Verpressen zum Compositebauteil bei niedrigeren Drücken durchgeführt werden, was von Vorteil sein kann.

Man erhält so Prepregs mit zumindest gleichen aber auch verbesserten wie in DE 102009001793 bzw. DE 102009001806 beschriebenen Verarbeitungseigenschaften, die für die Herstellung leistungsfähiger Composite für verschiedenste Anwendungen im Bereich der Bau-, der Automobil-, der Luft- und Raumfahrt-Industrie, der Energietechnik (Windkraftanlagen) und im Boots- und Schiffbau eingesetzt werden können. Die erfindungsgemäß verwendbaren reaktiven Polyurethanzusammensetzungen sind umweltfreundlich, kostengünstig, weisen gute mechanische Eigenschaften auf, lassen sich einfach verarbeiten und zeichnen sich nach Härtung durch eine gute Wetterbeständigkeit wie durch ein ausgewogenes Verhältnis zwischen Härte und Flexibilität aus.

Gegenstand der Erfindung sind Prepregs
im Wesentlichen aufgebaut aus
A) mindestens einem Faser förmigen Träger
   und
B)
   einem Matrixmaterial aus mindestens einer reaktiven Uretdiongruppen haltigen Polyurethanzusammensetzung B), im Wesentlichen enthaltend
   a) mindestens einen Uretdiongruppen haltigen Härter, basierend auf Polyadditionsverbindungen aus aliphatischen, (cyclo)aliphatischen oder cycloaliphatischen Uretdiongruppen enthaltenden Polyisocyanaten und hydroxylgruppenhaltigen Verbindungen, wobei der Härter unterhalb von 40 °C in fester Form und oberhalb von 110 °C in flüssiger Form vorliegt, einen freien NCO-Gehalt von kleiner 5 Gew.-% und einen Uretdiongehalt von 3 - 25 Gew.-% aufweist,
   b) mindestens eine hydroxylgruppenhaltige flüssige Harzkomponente b), wobei diese einen Tg oder einen Schmelzpunkt von kleiner 25 °C aufweist, und eine OH-Zahl zwischen 50 bis 2000 mg KOH / Gramm aufweist,
   c) gegebenenfalls mindestens einen Katalysator,
   so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,45 bis 0,55..

Die Glasübergangstemperatur Tg und der Schmelzpunkt wird gemäß DIN EN ISO 11357-1 und DIN 53765 ermittelt.

Die erfindungsgemäßen Prepregs weisen nach Abkühlung auf Raumtemperatur eine sehr hohe Lagerstabilität bei Raumtemperatur auf, sobald das Matrixmaterial einen Tg von mindestens 40 °C aufweist. Diese beträgt je nach enthaltener reaktiver Uretdiongruppen haltigen Polyurethanzusammensetzung und Katalyse mindestens einige Tage bei Raumtemperatur, aber in der Regel sind die Prepregs mehrere Wochen oder sogar Monate bei 40 °C und darunter lagerstabil. Die so hergestellten Prepregs sind meist nicht klebrig und daher sehr gut zu handhaben und weiter zu verarbeiten. Die erfindungsgemäß eingesetzten reaktiven oder hochreaktiven Uretdiongruppen haltigen Polyurethanzusammensetzungen weisen demnach eine sehr gute Haftung und Verteilung auf dem Faser förmigen Träger auf. Während der Weiterverarbeitung der Prepregs zu Composites (Verbundwerkstoffen) z. B. durch Verpressen bei erhöhten Temperaturen, erfolgt eine sehr gute Imprägnierung des Faser förmigen Trägers, dadurch bedingt, dass die dabei flüssig niedrig viskosen reaktiven oder hochreaktiven Polyurethanzusammensetzungen vor der Vernetzungsreaktion die Faser des Trägers sehr gut benetzen, bevor durch die Vernetzungsreaktion der reaktiven oder hochreaktiven Polyurethanzusammensetzung bei erhöhten Temperaturen eine Vergelung eintritt beziehungsweise die komplette Polyurethanmatrix durchhärtet.

Je nach Zusammensetzung der verwendeten reaktiven oder hochreaktiven Uretdiongruppen haltigen Polyurethanzusammensetzung und gegebenenfalls zugesetzten Katalysatoren können sowohl die Geschwindigkeit der Vernetzungsreaktion bei der Herstellung der Composite-Bauteile als auch die Eigenschaften der Matrix in weiten Bereichen variiert werden.

Als Matrixmaterial wird im Rahmen der Erfindung die zur Herstellung der Prepregs eingesetzte reaktive oder hochreaktive Uretdiongruppen haltige Polyurethanzusammensetzung definiert und bei der Beschreibung der Prepregs die auf der Faser durch das erfindungsgemäße Verfahren aufgebrachte noch reaktive oder hochreaktive Uretdiongruppen haltige Polyurethanzusammensetzung.

Die Matrix ist definiert als die im Composite vernetzten Matrixmaterialien aus den reaktiven oder hochreaktiven Uretdiongruppen haltigen Polyurethanzusammensetzungen.

### Träger

Der Faser förmige Träger in der vorliegenden Erfindung besteht aus Faser förmigem Material (auch häufig Verstärkungsfasern genannt). Im Allgemeinen ist jegliches Material, aus dem die Fasern bestehen, geeignet, bevorzugt wird jedoch Faser förmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z. B. Gewebe-Kombinationen aus Aramid- und Glasfasern, oder Kohlenstoff- und Glasfasern, können verwendet werden. Ebenso sind Hybrid-Composite-Bauteile mit Prepregs aus unterschiedlichen Faser förmigen Trägern herstellbar. Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundverstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z. B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungs-koeffizienten auf, werden also bei Erwärmung kürzer. Ihre spezifische Festigkeit und ihr Elastizitätsmodul ist deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramische Fasern. Bei dem Faser förmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als Faser förmiger Träger geeignet. Einen Überblick über Verstärkungsfasern enthält "Composites Technologien, Paolo Ermanni (Version 4), Script zur Vorlesung ETH Zürich, August 2007, Kapitel 7".

### Matrixmaterial

Prinzipiell sind alle, auch sonstige bei Raumtemperatur lagerstabilen reaktiven Polyurethanzusammensetzungen als Matrixmaterialen geeignet. Geeignete Polyurethanzusammensetzungen bestehen erfindungsgemäß aus Mischungen aus einer funktionellen Gruppen - reaktiv gegenüber NCO-Gruppen - aufweisenden flüssigen Harzkomponente b), wobei diese einen Tg oder einen Schmelzpunkt von kleiner 25 °C aufweist, und temporär deaktivierte, das heißt intern blockierte und/oder mit Blockierungsmitteln blockierte Di- oder Polyisocyanate, auch als Härter a) (Komponente a)) bezeichnet. Die Harzkomponente b) ist bei Raumtemperatur flüssig und hat somit keinen Festharz-Charakter. Bevorzugt ist Harzkomponente b) flüssig bei 20 bis 23 °C, besonders bevorzugt unter 20 °C.

Als funktionelle Gruppen der Harzkomponente b) sind Hydroxylgruppen, Aminogruppen und Thiolgruppen geeignet, welche mit den freien Isocyanatgruppen unter Addition reagieren und somit die Polyurethanzusammensetzung vernetzen und aushärten. Bevorzugt werden Polyole. Die Harzkomponenten müssen bei Raumtemperatur flüssig sein. Das bedeutet, dass die Harzkomponenten einen Tg oder einen Schmelzpunkt von unter 25 °C aufweisen müssen. Bevorzugt ist die Harzkomponente b) flüssig bei 20 bis 23 °C, besonders bevorzugt unter 20 °C.

Als Harzkomponente b) kommen in Frage monomere Polyole, Polyester, Polycaprolactone, Polyether, Polyacrylate, Polycarbonate und Polyurethane mit einer OH-Zahl von 50 bis 2000 mg KOH/Gramm und einer mittleren Molmasse von 62 bis 3000 g/Mol.

Die Menge an den funktionelle Gruppen aufweisenden Harzkomponente b) wird so gewählt, dass bevorzugt auf jede funktionelle Gruppe der Komponente b) 0,6 bis 2 NCO- Äquivalente oder 0,3 bis 1 Uretdiongruppe der Komponente a) entfällt.

Bevorzugt werden Polyole mit einer OH-Zahl von 200 bis 1500 mg KOH/Gramm, besonders bevorzugt mit einer OH-Zahl von 501 bis 1000 mg KOH/Gramm eingesetzt. Ganz besonders bevorzugt werden Polyole mit einer OH-Zahl von 600 bis 800 mg KOH/Gramm eingesetzt. Bevorzugt werden Polyole mit einem mittleren Molekulargewicht von 100 bis 1000 g/mol, besonders bevorzugt mit einem mittleren Molekulargewicht von 100 bis 500 g/mol.

Ganz besonders bevorzugt werden Polyole mit einer OH-Zahl von 501 bis 1000 mg KOH/Gramm, die flüssig sind bei 20 bis 23 °C, bevorzugt unter 20 °C. Noch bevorzugter sind Polyole mit einer OH-Zahl von 600 bis 800 mg KOH/Gramm, die flüssig sind bei 20 bis 23 °C, bevorzugt unter 20 °C.

Selbstverständlich können auch Mischungen solcher Harzkomponenten b) eingesetzt werden.

### Geeignete Polyole sind beispielsweise:

| | OH-Zahl (ca.) | Molmasse | Hersteller |
|---|---|---|---|
| Glycerin | 1800 | 92 | Perstorp |
| Polyol 3165 | 1010 | 165 | Perstorp |
| Polyol 3380 | 380 | 440 | Perstorp |
| Polyol 3610 | 610 | 280 | Perstorp |
| Polyol 3940 | 940 | 180 | Perstorp |
| Polyol 3990 | 990 | 170 | Perstorp |
| Polyol 4290 | 290 | 800 | Perstorp |
| Polyol 4360 | 360 | 630 | Perstorp |
| Polyol 4525 | 525 | 430 | Perstorp |
| Polyol 4640 | 640 | 360 | Perstorp |
| Polyol 4800 | 800 | 280 | Perstorp |
| Polyol R3215 | 215 | 1010 | Perstorp |
| Polyol R3430 | 430 | 400 | Perstorp |
| Polyol R3530 | 530 | 310 | Perstorp |
| Polyol R3540 | 540 | 310 | Perstorp |
| Polyol R3610 | 610 | 280 | Perstorp |
| Polyol R4631 | 630 | 280 | Perstorp |
| Polyol R6405 | 405 | 830 | Perstorp |
| Voranol CP 260 | 660 | 255 | Dow |
| Voranol CP 300 | 565 | 300 | Dow |
| Voranol CP 450 | 380 | 450 | Dow |
| Voranol CP 755 | 240 | 700 | Dow |
| Voranol CP 1055 | 155 | 1000 | Dow |
| Voranol RH 360 | 360 | 700 | Dow |
| Voranol RN 490 | 490 | 490 | Dow |
| Voranol RA 640 | 640 | 350 | Dow |
| Voranol RA 800 | 800 | 280 | Dow |
| Terathane 650 | 170 | 650 | DuPont |
| Terathane 1000 | 100 | 1000 | Du Pont |
| Capa 3031 | 560 | 300 | Perstorp |
| Capa 3041 | 395 | 425 | Perstorp |
| Capa 3050 | 310 | 540 | Perstorp |
| Capa 3091 | 180 | 900 | Perstorp |
| Capa 4101 | 220 | 1000 | Perstorp |

Selbstverständlich können auch Mischungen solcher Polyole b) eingesetzt werden.

Als Härterkomponente a) werden mit Blockierungsmitteln blockierte oder intern blockierte (Uretdion) Di- und Polyisocyanate eingesetzt.
Die erfindungsgemäß eingesetzten Di- und Polyisocyanate können aus beliebigen aromatischen, aliphatischen, cycloaliphatischen und/oder (cyclo)aliphatischen Di- und/oder Polyisocyanaten bestehen.

Als aromatische Di- oder Polyisocyanate sind prinzipiell alle bekannten aromatischen Verbindungen geeignet. Besonders geeignet sind 1,3- und 1,4-Phenylendiisocyanat, 1,5-Naphthylen-diisocyanat, Toluidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandiisocyanaten (MDI) und oligomeren Diphenylmethandiisocyanaten (Polymer-MDI), Xylylendiisocyanat, Tetramethylxylylendiisocyanat und Triisocyanatotoluol.

Geeignete aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI. Beispiele sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate.

Bevorzugt werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI). Ganz besonders bevorzugt werden IPDI, HDI, TMDI und/oder H₁₂MDI eingesetzt, wobei auch die Isocyanurate einsetzbar sind. Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexyl-isocyanat, 2,4'-Methylenbis(cyclohexyl)diisocyanat, 1,4-Diisocyanato-4-methyl-pentan.

Selbstverständlich können auch Gemische der Di- und Polyisocyanate eingesetzt werden.

Weiterhin werden vorzugsweise Oligo- oder Polyisocyanate verwendet, die sich aus den genannte Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und/oder HDI.

Die erfindungsgemäß verwendeten Polyisocyanate sind blockiert. In Frage kommen dazu externe Blockierungsmittel, wie z. B. Acetessigsäureethylester, Diisopropylamin, Methylethylketoxim, Malonsäurediethylester, ε-Caprolactam, 1,2,4-Triazol, Phenol bzw. substituierte Phenole und 3,5-Dimethylpyrazol.
Die bevorzugt verwendeten Härterkomponenten sind IPDI-Addukte, die Isocyanurat-Gruppierungen und ε-Caprolactam blockierte Isocyanatstrukturen enthalten.
Auch eine interne Blockierung ist möglich und diese wird bevorzugt verwendet. Die interne Blockierung erfolgt über eine Dimerbildung über Uretdion-Strukturen, die bei erhöhter Temperatur wieder in die ursprünglich vorhandenen Isocyanat-Strukturen zurückspalten und damit die Vernetzung mit dem Binder in Gang setzen.

Optional können die reaktiven Polyurethanzusammensetzungen zusätzliche Katalysatoren enthalten. Es handelt sich hierbei um metallorganischen Katalysatoren, wie z. B. Dibutylzinndilaurat (DBTL), Zinnoctoat, Bismuthneodecanoat, oder aber tertiäre Amine, wie z. B. 1,4-Diazabicylco[2.2.2.]octan, in Mengen von 0,001 - 1 Gew.-%. Diese erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet und als bezeichnet.

Für die Herstellung der reaktiven Polyurethanzusammensetzungen können die in der Pulverlacktechnologie üblichen Zusatzstoffe, wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid oder Farbstoffe können in einer Menge bis zu 50 Gew.-% der Gesamtzusammensetzung zugesetzt werden. Reaktiv (Variante I) bedeutet im Rahmen dieser Erfindung, dass die erfindungsgemäß eingesetzten reaktiven Polyurethanzusammensetzungen wie oben beschrieben bei Temperaturen ab 160 °C, und zwar je nach Art des Trägers aushärten.
Die erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet. Die Zeit zur Aushärtung der erfindungsgemäß eingesetzten Polyurethanzusammensetzung liegt in der Regel innerhalb von 5 bis 60 Minuten.

Bei der vorliegenden Erfindung ein Matrixmaterial B) aus einer reaktiven Uretdiongruppen haltigen Polyurethanzusammensetzung B) eingesetzt, im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltenden Polyisocyanaten und hydroxylgruppenhaltigen Verbindungen, wobei der Härter unterhalb von 40 °C in fester Form und oberhalb von 110 °C in flüssiger Form vorliegt und einen freien NCO-Gehalt von kleiner 5 Gew.-% und einen Uretdiongehalt von 3 - 25 Gew.-% aufweist,
b) mindestens eine hydroxylgruppenhaltige flüssige Harzkomponente b), wobei diese einen Tg oder einen Schmelzpunkt von kleiner 25 °C aufweist, und eine OH-Zahl zwischen 50 bis 2000 aufweist,
c) gegebenenfalls mindestens einen Katalysator,
d) gegebenenfalls aus der Polyurethanchemie bekannte Hilfs- und Zusatzstoffe,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,45 bis 0,55. Letzteres entspricht einem NCO/OH-Verhältnis von 0,9 bis 1,1 zu 1.

Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Es können die oben genannten Di- und Polyisocyanate verwendet werden. Bevorzugt sind aber Di- und Polyisocyanate aus beliebigen aliphatischen, cycloaliphatischen und/oder (cyclo)aliphatischen Di- und/oder Polyisocyanaten. Erfindungsgemäß werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) verwendet. Ganz besonders bevorzugt werden IPDI, HDI, TMDI und H₁₂MDI allein oder in Mischungen eingesetzt, wobei auch die Isocyanurate einsetzbar sind.

Ganz besonders bevorzugt wird für das Matrixmaterial IPDI und/oder HDI verwendet. Die Umsetzung dieser Uretdiongruppen enthaltenden Polyisocyanate zu Uretdiongruppen haltigen Härtern a) beinhaltet die Reaktion der freien NCOGruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524).

Bevorzugte Uretdiongruppen aufweisende Härter a) haben einen freien NCO-Gehalt von weniger als 5 Gew.-% und einen Gehalt an Uretdiongruppen von 3 bis 25 Gew.-%, bevorzugt 6 bis 18 Gew.-% (berechnet als C₂N₂O₂, Molekulargewicht 84). Bevorzugt werden Polyester und monomere Dialkohole. Außer den Uretdiongruppen können die Härter auch Isocyanurat-, Biuret-, Allophanat-, Urethan- und/oder Harnstoff-Strukturen aufweisen.

Bei den hydroxylgruppenhaltigen flüssigen Harzkomponenten b) werden bevorzugt monomere Polyole, Polyester, Polycaprolactone, Polyether, Polyacrylate, Polycarbonate und Polyurethane mit einer OH-Zahl von 50 bis 2000 mg KOH/Gramm und einer mittleren Molmasse von 62 bis 3000 g/Mol, wobei diese einen Tg oder einen Schmelzpunkt von kleiner 25 °C aufweisen, eingesetzt.

Bevorzugt werden Polyole mit einer OH-Zahl von 200 bis 1500 mg KOH/Gramm, besonders bevorzugt mit einer OH-Zahl von 501 bis 1000 mg KOH/Gramm eingesetzt. Ganz besonders bevorzugt werden Polyole mit einer OH-Zahl von 600 bis 800 mg KOH/Gramm.
Bevorzugt werden Polyole mit einem mittleren Molekulargewicht von 100 bis 1000 g/mol, besonders bevorzugt mit einem mittleren Molekulargewicht von 100 bis 500 g/mol.

Ganz besonders bevorzugt werden Polyole mit einer OH-Zahl von 501 bis 1000 mg KOH/Gramm, die flüssig sind bei 20 bis 23 °C, bevorzugt unter 20 °C. Noch bevorzugter sind Polyole mit einer OH-Zahl von 600 bis 800 mg KOH/Gramm, die flüssig sind bei 20 bis 23 °C, bevorzugt unter 20 °C.

Selbstverständlich können auch Mischungen solcher Harzkomponenten eingesetzt werden. Die Menge an der hydroxylgruppenhaltigen Harzkomponente b) wird so gewählt, dass auf jede Hydroxylgruppe der Komponente b) 0,3 bis 1 Uretdiongruppe der Komponente a), bevorzugt 0,45 bis 0,55, entfällt.

Optional können in den erfindungsgemäßen reaktiven Polyurethanzusammensetzungen B) zusätzliche Katalysatoren c) enthalten sein. Es handelt sich hierbei um metallorganischen Katalysatoren, wie z. B. Dibutylzinndilaurat, Zinkoctoat, Bismuthneodecanoat, oder aber tertiäre Amine, wie z. B. 1,4-Diazabicylco[2.2.2.]octan, in Mengen von 0,001 - 1 Gew.-%. Diese erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet und als Variante I bezeichnet.
Für die Herstellung der erfindungsgemäßen reaktiven Polyurethanzusammensetzungen können die in der Lack-, Klebstoff- und Dichtstofftechnologie üblichen Zusatzstoffe d) wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 30 Gew.-% der Gesamtzusammensetzung zugesetzt werden.

Die erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet. Die erfindungsgemäß eingesetzten reaktiven Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z. B. IPDI oder H12MDI) wird zusätzlich noch eine gute Witterungsbeständigkeit erreicht.

Besonders bevorzugt wird bei der Erfindung ein Matrixmaterial eingesetzt
aus
B) mindestens einer hochreaktiven Uretdiongruppen haltigen Polyurethanzusammensetzung, im Wesentlichen enthaltend
a) mindestens einen Uretdiongruppen haltigen Härter
   und
b) optional mindestens einer flüssigen Harzkomponente b), wobei diese einen Tg oder einen Schmelzpunkt von kleiner 25 °C aufweist, und eine OH-Zahl zwischen 50 und 2000 mg KOH / Gramm aufweist, mit gegenüber NCO-Gruppen reaktiven funktionellen Gruppen;
c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
   und
d) 0,1 bis 5 Gew.-% mindestens einen Co-Katalysator, ausgewählt aus
   d1) mindestens einem Epoxid
      und/oder
   d2) mindestens einem Metallacetylacetonat und/oder quarternären Ammoniumacetylacetonat und/oder quarternären Phosphoniumacetylacetonat;
e) gegebenenfalls aus der Polyurethanchemie bekannte Hilfs- und Zusatzstoffe.

Ganz besonders bevorzugt wird ein Matrixmaterial B) eingesetzt aus B
) mindestens einer hochreaktiven Uretdiongruppen haltigen Polyurethanzusammensetzung als Matrixmaterial, im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltenden Polyisocyanaten und hydroxylgruppenhaltigen Verbindungen, wobei der Härter unterhalb von 40 °C in fester Form und oberhalb von 110 °C in flüssiger Form vorliegt und einen freien NCO-Gehalt von kleiner 5 Gew.-% und einem Uretdiongehalt von 3 - 25 Gew.-% aufweist,
b) mindestens ein Polyol, wobei dieses einen Tg oder einen Schmelzpunkt von kleiner 25 °C aufweist, und eine OH-Zahl zwischen 50 und 2000 mg KOH / Gramm aufweist;
c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
   und
d) 0,1 bis 5 Gew.-% mindestens einen Co-Katalysator, ausgewählt aus
   d1) mindestens einem Epoxid
      und/oder
   d2) mindestens einem Metallacetylacetonat und/oder quarternären Ammoniumacetylacetonat und/oder quarternären Phosphoniumacetylacetonat;
e) gegebenenfalls aus der Polyurethanchemie bekannte Hilfs- und Zusatzstoffe,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,6 bis 0,9. Letzteres entspricht einem NCO/OH-Verhältnis von 0,6 bis 2 zu 1 bzw. bevorzugt 1,2 bis 1,8 zu 1. Diese erfindungsgemäß eingesetzten hochreaktiven Polyurethanzusammensetzungen werden bei Temperaturen von 100 bis 160 °C ausgehärtet und als Variante II bezeichnet.

Geeignete hochreaktive Uretdiongruppen haltige Polyurethanzusammensetzungen enthalten erfindungsgemäß Mischungen aus temporär deaktivierten, das heißt Uretdiongruppen haltigen (intern blockierte) Di- oder Polyisocyanaten, auch als Härter a) bezeichnet, und den erfindungsgemäß enthaltenen Katalysatoren c) und d) und optional zusätzlich ein funktionelle Gruppen - reaktiv gegenüber NCO-Gruppen - aufweisende flüssigen Harzkomponente, wobei diese einen Tg oder einen Schmelzpunkt von kleiner 25 °C aufweist, mit einer OH-Zahl von 50 bis 2000 mg KOH/Gramm, auch als Harz b) bezeichnet. Die Katalysatoren gewährleisten eine Aushärtung der Uretdiongruppen haltigen Polyurethanzusammensetzungen bei niedrigen Temperaturen. Die Uretdiongruppen haltigen Polyurethanzusammensetzungen sind somit hochreaktiv.

Als Uretdiongruppen haltigen Härter Komponente a) werden solche wie oben beschrieben eingesetzt.

Als flüssige Harzkomponente b) kommen in Frage monomere Polyole, Polyester, Polycaprolactone, Polyether, Polyacrylate, Polycarbonate und Polyurethane mit einer OH-Zahl von 50 bis 2000 mg KOH/Gramm und einer mittleren Molmasse von 62 bis 3000 g/Mol.

Bevorzugt werden flüssige Polyole mit einer OH-Zahl von 200 bis 1500 mg KOH/Gramm, besonders bevorzugt mit einer OH-Zahl von 501 bis 1000 mg KOH/Gramm eingesetzt. Bevorzugt werden Polyole mit einem mittleren Molekulargewicht von 100 bis 1000 g/mol, besonders bevorzugt mit einem mittleren Molekulargewicht von 100 bis 500 g/mol.

Ganz besonders bevorzugt werden Polyole mit einer OH-Zahl von 501 bis 1000 mg KOH/Gramm, die flüssig sind bei 20 bis 23 °C, bevorzugt unter 20 °C.

Als Katalysatoren unter c) werden quarternäre Ammoniumsalze, bevorzugt Tetralkylammoniumsalze und/oder quarternäre Phosphoniumsalze mit Halogenen, Hydroxiden, Alkoholaten oder organischen oder anorganischen Säureanionen als Gegenion, eingesetzt. Beispiele dafür sind:
Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Tri-methylphenylammoniumhydroxid, Triethylmethylammoniumhydroxid, Tri-methylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Tri-methylphenylammoniumethanolat, Triethylmethylammoniumethanolat, Tri-methylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Trimethylphenylammoniumbenzylat, Triethylmethylammoniumbenzylat, Trimethylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid. Diese Katalysatoren können allein oder in beliebigen Mischungen zugesetzt werden.
Bevorzugt werden Tetraethylammoniumbenzoat und/oder Tetrabutylammoniumhydroxid verwendet.
4Der Anteil an Katalysatoren c) kann 0,1 bis 5 Gew.-% betragen, bevorzugt von 0,3 bis Der Anteil an Katalysatoren c) kann 0,1 bis 5 Gew.-% betragen, bevorzugt von 0,3 bis 2 Gew.-%, bezogen auf die Gesamtformulierung des Matrixmaterials.

Eine erfindungsgemäße Variante schließt die Anbindung solcher Katalysatoren c) an die funktionellen Gruppen der Polymere b) mit ein. Außerdem können diese Katalysatoren mit einer inerten Hülle umgeben und damit verkapselt sein.

Als Co-Katalysatoren d1) werden Epoxide eingesetzt. In Frage kommen dabei z. B. Glycidylether, Glycidylester, aliphatische Epoxide, Diglycidylether auf Basis Bisphenol A und/oder Glycidylmethacrylate. Beispiele für solche Epoxide sind Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname KARDURA E10, Shell), 3,4-Epoxycyclohexylmethyl-3',4'-epoxycyclohexancarboxylat (ECC), Diglycidylether auf Basis Bisphenol A (Handelsname EPIKOTE 828, Shell) Ethylhexylglycidylether, Butylglycidylether, Pentaerythrittetraglycidylether, (Handelsname POLYPOX R 16, UPPC AG) sowie andere Polypoxtypen mit freien Epoxygruppen. Es können auch Mischungen eingesetzt werden. Bevorzugt werden verwendet Gemische aus Terephthalsäurediglycidylester und Trimelitsäuretriglycidylester (ARALDIT PT 910 und/oder 912) eingesetzt.

Als Co-Katalysatoren d2) kommen Metallacetylacetonate in Frage. Beispiele dafür sind Zinkacetylacetonat, Lithiumacetylacetonat und Zinnacetylacetonat, allein oder in Mischungen. Bevorzugt wird Zinkacetylacetonat eingesetzt.

Als Co-Katalysatoren d2) kommen ausserdem quarternäre Ammoniumacetylacetonate oder quarternäre Phosphoniumacetylacetonate in Frage.
Beispiele für solche Katalysatoren sind Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetylacetonat, Tetrabutylphosphoniumacetylacetonat, Benzyltrimethylphosphoniumacetylacetonat, Benzyltriethylphosphoniumacetylacetonat. Besonders bevorzugt werden Tetraethylammoniumacetylacetonat und/oder Tetrabutylammoniumacetylacetonat eingesetzt. Selbstverständlich können auch Mischungen solcher Katalysatoren verwendet werden.

Der Anteil an Co-Katalysatoren d1) und/oder d2) kann von 0,1 bis 5 Gew.-% betragen, bevorzugt von 0,3 bis 2 Gew.-%, bezogen auf die Gesamtformulierung des Matrixmaterials.

Mit Hilfe der erfindungsgemäß eingesetzten hochreaktiven und somit bei Niedrigtemperatur härtenden Polyurethanzusammensetzungen B) kann bei 100 bis 160 °C Aushärtungstemperatur nicht nur Energie und Aushärtungszeit gespart werden, sondern es lassen sich auch viele Temperatur sensible Träger verwenden.

Hochreaktiv (Variante II) bedeutet im Rahmen dieser Erfindung, dass die erfindungsgemäß eingesetzten Uretdiongruppen haltigen Polyurethanzusammensetzungen bei Temperaturen von 100 bis 160 °C, und zwar je nach Art des Trägers aushärten. Bevorzugt beträgt diese Aushärtungstemperatur 120 bis 150 °C, besonders bevorzugt von 130 bis 140 °C. Die Zeit zur Aushärtung der erfindungsgemäß eingesetzten Polyurethanzusammensetzung liegt in der Regel innerhalb von 1 bis 60 Minuten.

Die erfindungsgemäß eingesetzten reaktiven oder hochreaktiven Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z. B. IPDI oder H₁₂MDI) wird zusätzlich noch eine gute Witterungsbeständigkeit erreicht.

Die erfindungsgemäß hergestellten Prepregs als auch die Composite-Bauteile weisen einen Faservolumenanteil von größer 10 %, bevorzugt von 50 - 70 %, besonders bevorzugt von 50 bis 65 % auf.

Das Matrixmaterial B) kann flüssig, hoch viskos oder fest sein. In der Regel weist das Matrixmaterial B) einen Tg oder Schmelzpunkt von mindestens 30 °C auf.

Die erfindungsgemäß als Matrixmaterial verwendeten reaktiven oder hochreaktiven Polyurethanzusammensetzungen bestehen im Wesentlichen aus einer Mischung aus einem reaktiven Harz und einem Härter. Diese Mischung reagiert in der Regel erst oberhalb von 160 °C, bei den reaktiven Polyurethanzusammensetzungen, oder oberhalb von 100 °C bei den hochreaktiven Polyurethanzusammensetzungen zu einem vernetzten Polyurethan und bildet somit die Matrix des Composites. Das bedeutet, dass die erfindungsgemäßen Prepregs nach ihrer Herstellung aus dem Träger und der applizierten reaktiven Polyurethanzusammensetzung als Matrixmaterial, welche in unvernetzter, aber in reaktiver Form vorliegt, aufgebaut sind.

Die Prepregs sind also lagerstabil, in der Regel mehrere Tage und sogar Wochen und Monate und können somit jederzeit zu Compositen weiterverarbeitet werden. Dies ist der wesentliche Unterschied zu den bereits oben beschriebenen 2-Komponenten-Systemen, die reaktiv und nicht lagerstabil sind, da diese nach dem Aufbringen sofort beginnen zu Polyurethanen zu reagieren und vernetzen.

Gegenstand der Erfindung ist auch ein Verfahren zur Herstellung von Prepregs
im Wesentlichen aufgebaut aus
A) mindestens einem Faser förmigen Träger
   und
B) einem Matrixmaterial aus mindestens einer reaktiven Uretdiongruppen haltigen Polyurethanzusammensetzung B), im Wesentlichen enthaltend
   a) mindestens einen Uretdiongruppen haltigen Härter, basierend auf Polyadditionsverbindungen aus aliphatischen, (cyclo)aliphatischen oder cycloaliphatischen Uretdiongruppen enthaltenden Polyisocyanaten und hydroxylgruppenhaltigen Verbindungen, wobei der Härter unterhalb von 40 °C in fester Form und oberhalb von 110 °C in flüssiger Form vorliegt, einen freien NCO-Gehalt von kleiner 5 Gew.-% und einen Uretdiongehalt von 3 - 25 Gew.-% aufweist,
   b) mindestens eine hydroxylgruppenhaltige flüssige Harzkomponente b), wobei diese einen Tg oder einen Schmelzpunkt von kleiner 25 °C aufweist, und eine OH-Zahl zwischen 50 bis 2000 mg KOH / Gramm aufweist,
   c) gegebenenfalls mindestens einen Katalysator,
   so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,45 bis 0,55,
   I. durch Herstellung der reaktiven Polyurethanzusammensetzung B),
      und
   II. Imprägnierung des Faser förmigen Träger A) mit der Polyurethanzusammensetzung B), welche optional gelöst in Lösemittel ist,
   III. und gegebenenfalls Entfernen des Lösemittels.

Das Matrixmaterial B) kann flüssig, hoch viskos oder fest sein. In der Regel weist das Matrixmaterial B) einen Tg oder Schmelzpunkt von mindestens 30 °C auf.

Das Prinzip des Verfahrens zur Herstellung von Prepregs besteht darin, dass zunächst eine reaktive Polyurethanzusammensetzung B) aus deren einzelnen Komponenten, optional in einem geeigneten gemeinsamen Lösemittel, hergestellt wird. Diese Kombination aus der reaktiven Polyurethanzusammensetzung B) und optional Lösemittel wird dann auf den Faser förmigen Träger A) aufgebracht, bevorzugt direkt nach der Herstellung der reaktiven Polyurethanzusammensetzung B), wobei der Faser förmige Träger getränkt / imprägniert wird. Anschließend wird das optionale Lösemittel gegebenenfalls entfernt. Bevorzugt wird das Lösemittel vollständig bei niedriger Temperatur, bevorzugt < 160 °C, besonders bevorzugt < 100 °C durch z. B. thermische Behandlung oder Vakuumapplizierung entfernt.

Danach können die lagerfähigen Prepregs zu einem späteren Zeitpunkt zu Composites weiterverarbeitet werden. Durch dass erfindungsgemäße Verfahren erfolgt eine sehr gute Imprägnierung des Faser förmigen Trägers, dadurch bedingt, dass flüssige Harzkomponenten b) die reaktiven Polyurethanzusammensetzungen dazu befähigen, die Faser des Trägers sehr gut benetzen. Auch optional verwendete Lösemittel lassen sich deutlich einfacher entfernen, wenn flüssige Harzkomponenten b) eingesetzt werden. Bei der nachfolgenden Verpressung zu Compositen führen die flüssigen Harzkomponenten zu einem verbesserten Verlauf innerhalb der Schichten und damit zu überlegenen Materialeigenschaften.

Die Herstellung der Polyurethanzusammensetzung B) zur Herstellung der Prepregs kann in geeigneten Aggregaten, wie z. B. beheizbaren Rührkesseln, Knetern, oder auch Extrudern, erfolgen, wobei Temperaturobergrenzen von 100 °C nicht überschritten werden sollten.

Als geeignete Lösemittel für das erfindungsgemäße Verfahren können alle aprotischen Flüssigkeiten verwendet werden, die nicht reaktiv gegenüber den reaktiven Polyurethanzusammensetzungen sind, ein ausreichendes Lösevermögen gegenüber den eingesetzten einzelnen Komponenten der reaktiven Polyurethanzusammensetzung aufweisen und im Rahmen des Prozessschrittes der Lösemittelentfernung bis auf geringfügige Spuren (< 0,5 Gewichts-%) aus dem mit der reaktiven Polyurethanzusammensetzung imprägnierten Prepreg abgezogen werden können, wobei eine Recyclierung des abgetrennten Lösemittels vorteilhaft ist.

Beispielhaft seien hier genannt: Ketone (Aceton, Methylethylketon, Methylisobutylketon, Cyclohexanon), Ether (Tetrahydrofuran), Ester (n-Propylacetat, n-Butylacetat, Isobutylacetat, 1,2-Propylencarbonat, Propylenglykol-Methylether-Acetat).

Die Herstellung der Prepregs nach diesem Imprägnierverfahren, optional mit Lösemitteln, kann erfindungsgemäß im Prinzip nach beliebigen Methoden und mittels der bekannten Anlagen und Apparaturenerfolgen.

Die Lösungsimprägnierung wird unter anderem für die Herstellung von Epoxycomposites eingesetzt
["Composites Technologien, Paolo Ermanni (Version 4), Script zur Vorlesung ETH Zürich, August 2007, Kapitel 4.2.2"]. Reaktive Polyurethanzusammensetzungen in Lösung werden dort aber nicht genannt.

Alternativ kann die Imprägnierung der Faser auch ohne Lösemittel im Direkt-Schmelzverfahren erfolgen.

Gegenstand der Erfindung ist ein Direkt-Schmelze-Imprägnierverfahren zur Herstellung von Prepregs,
im Wesentlichen aufgebaut aus
A) mindestens einem Faser förmigen Träger
   und
B) einem Matrixmaterial aus mindestens einer reaktiven Uretdiongruppen haltigen Polyurethanzusammensetzung B), im Wesentlichen enthaltend
   a) mindestens einen Uretdiongruppen haltigen Härter, basierend auf Polyadditionsverbindungen aus aliphatischen, (cyclo)aliphatischen oder cycloaliphatischen Uretdiongruppen enthaltenden Polyisocyanaten und hydroxylgruppenhaltigen Verbindungen, wobei der Härter unterhalb von 40 °C in fester Form und oberhalb von 110 °C in flüssiger Form vorliegt, einen freien NCO-Gehalt von kleiner 5 Gew.-% und einen Uretdiongehalt von 3 - 25 Gew.-% aufweist,
   b) mindestens eine hydroxylgruppenhaltige flüssige Harzkomponente b), wobei diese einen Tg oder einen Schmelzpunkt von kleiner 25 °C aufweist, und eine OH-Zahl zwischen 50 bis 2000 mg KOH / Gramm aufweist,
   c) gegebenenfalls mindestens einen Katalysator,
   so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,45 bis 0,55,
   I. durch Herstellung der reaktiven Polyurethanzusammensetzung B) in der Schmelze, und
   II. direkte Imprägnierung des Faser förmigen Trägers A) mit der Schmelze aus B).

Das Prinzip des Direkt-Schmelze-Impregnierverfahren der Prepregs besteht darin, dass zunächst eine reaktive Polyurethanzusammensetzung B) aus deren einzelnen Komponenten hergestellt wird. Diese Schmelze der reaktiven Polyurethanzusammensetzung B) wird dann direkt auf den Faser förmigen Träger A) aufgebracht, das heißt es erfolgt eine Imprägnierung des Faser förmigen Trägers A) mit der Schmelze aus B). Danach können die abgekühlten lagerfähigen Prepregs zu einem späteren Zeitpunkt zu Composites weiterverarbeitet werden. Durch dass erfindungsgemäße Direkt-Schmelze-Impregnierverfahren erfolgt eine sehr gute Imprägnierung des Faser förmigen Trägers, dadurch bedingt, dass die dabei flüssig niedrig viskosen reaktiven Polyurethanzusammensetzungen die Faser des Trägers sehr gut benetzen, wobei die zu einer beginnenden Vernetzungsreaktion führen könnende thermische Belastung der Polyurethanzusammensetzung durch eine vorherige Schmelzehomogenisierung vermieden wird, des weiteren fallen die Prozessschritte der Vermahlung und Siebung in einzelne Partikelgrößenfraktionen weg, sodass eine höhere Ausbeute an imprägniertem Faser förmigen Träger erzielt wird.

Die hohen Temperaturen, wie sie beim herkömmlichen Schmelzimprägnierverfahren oder bei der Ansinterung von pulverförmigen reaktiven Polyurethanzusammensetzungen zumindest kurzzeitig vonnöten sind, sind bei diesem erfindungsgemäßen Verfahren nicht in diesem Masse erforderlich, da die flüssigen Harzkomponenten zu deutlich herabgesetzten Schmelzviskositäten führen. Eventuelle Temperaturbelastungen der reaktiven Polyurethanzusammensetzungen werden gegebenenfalls nur bei der Entfernung des optional eingesetzten Lösemittels nach der Imprägnierung auftreten, wobei Temperaturen von 80 bis 100 °C nicht überschritten werden sollten, um ein Anreagieren des reaktiven Matrixmaterials zu verhindern oder zu minimieren.

Die Prepregs können je nach Bedarf zu unterschiedlichen Formen kombiniert und zugeschnitten werden.

Zur Konsolidierung der Prepregs zu einem einzigen Composite und zur Vernetzung des Matrixmaterials zur Matrix werden die Prepregs zugeschnitten, gegebenenfalls vernäht oder anderweitig fixiert und in einer geeigneten Form unter Druck und gegebenenfalls Anlegen von Vakuum verpresst. Im Rahmen dieser Erfindung erfolgt dieser Vorgang der Herstellung der Composites aus den Prepregs je nach Aushärtungszeit bei Temperaturen von oberhalb etwa 160 °C bei Einsatz von reaktiven Matrixmaterialien (Variante I), oder bei mit entsprechenden Katalysatoren versehenen hochreaktiven Matrixmaterialien (Variante II) bei Temperaturen von über 100 °C.

Gegenstand der Erfindung sind auch Prepregs mit einer fixierten Folie C) auf der Composite-Oberfläche.

Als (Multilayer-)Folien können Kaschierfolien auf der Basis thermoplastischer Kunststoffe oder deren Mischungen bzw. Compounds, z.B. aus Thermoplastischen Polyurethanen (TPU), Thermoplastischen Polyolefinen (TPO), (Meth)acrylpolymeren, Polycarbonatfolien (z.B. Lexan SLX from Sabic Innovative Plastics), Polyamiden, Polyetheresteramiden, Polyetheramiden, Polyvinylidendifluorid (z.B. SOLIANT FLUOREX Filme von SOLIANT, AkzoNobel oder AVLOY from Avery) oder metallisierte oder metallische Folien wie z.B. Aluminium, Kupfer oder anderen Materialien verwendet werden, wobei eine Haftung sowohl zu den noch reaktiven oder hochreaktiven Uretdiongruppen haltigen Matrixsystemen bereits bei der Herstellung der Prepregs erfolgt. Außerdem erfolgt zusätzlich bei der Weiterverarbeitung der Prepregs zu den ausgehärteten Polyurethan-Laminat-Oberflächen der Composite eine weitere Fixierung der Folie. Die Kaschierfolien auf der Basis thermoplastischer Materialien können sowohl in Gänze durch Pigmente und/oder Farbstoffe eingefärbt als auch bedruckt oder an der äußeren Oberfläche lackiert sein.

Die Kaschierfolie hat eine Dicke zwischen 0,2 und 10 mm, bevorzugt zwischen 0,5 und 4 mm. Der Erweichungspunkt liegt zwischen 80 und 260 °C, bevorzugt zwischen 110 und 180 °C, besonders bevorzugt zwischen 130 und 180 °C für die lagerstabilen hochreaktiven Polyurethanzusammensetzungen und zwischen 130 und 220 °C für die reaktiven Polyurethanzusammensetzungen und besonders bevorzugt zwischen 160 und 220 °C.

Geeignete Folien sind z.B. auch in der WO 2004/067246 beschrieben.

Die Fixierung der Kaschierfolie auf dem Prepreg erfolgt erfindungsgemäß direkt bei der Herstellung des Prepregs. Dabei entsteht die Fixierung der Folie durch die Haftung durch die Matrix, beispielhaft dargestellt siehe dazu Abbildung 1, durch Kaschierung des Prepregs in situ bei Trocknungstemperaturen des Prepregs (sub-Vernetzungstemperaturen welches die Temperatur bezeichnet, bei der die Vernetzung des Matrixmaterials noch nicht einsetzt). Im Allgemeinen erfolgt diese Fixierung bei Temperaturen von 50 bis 110 °C.

Die Fixierung der Kaschierfolie auf dem Prepreg kann auch so erfolgen, dass zunächst in einem ersten Schritt ein Prepreg hergestellt wird und in einem zweiten Schritt die Folie auf das nachträglich bereits separat hergestellte Prepreg aufgebracht und fixiert wird. Dabei entsteht die Fixierung der Folie durch die Haftung durch die Matrix, durch Kaschierung des Prepregs bei Trocknungstemperaturen des Prepregs (sub-Vernetzungstemperaturen). Im Allgemeinen erfolgt diese Fixierung bei Temperaturen von 50 bis 110 °C.

Die so hergestellten mit Kaschierfolien versehenen, lagerstabilen Prepregs können auch mit weiteren Prepregs (unkaschiert) zu Laminaten bzw. zu Sandwichbauteilen mittels geeigneter Verfahren z.B. Autoklav- oder Pressmold-Verfahren verarbeitet werden.

Eine Alternative zur Verwendung einer Kaschierfolie stellt die separate Herstellung einer dekorativen Beschichtungslage oder Folie dar, aus dem gleichen oder formulierungsähnlichen Material auf der Basis reaktiver oder hochreaktiver Polyurethanzusammensetzungen B), mit dem die erfindungsgemäßen lagerstabilen Prepregs hergestellt werden.

Eine weitere Alternative (und Ausführungsform der Erfindung) eines erfindungsgemäßen Prepregs weist eine besondere Oberflächengüte durch ein deutlich erhöhtes Matrix-zu-Faser-Verhältnis auf. Es besitzt demnach ein sehr geringen Faservolumenanteil. Für eine besonders glatte und/oder gefärbte Composite-Bauteil-Oberfläche ist bei dieser Ausführung ein Faservolumenanteil von < 50 %, bevorzugt < 40 %, besonders bevorzugt < 35 % eingestellt.

Die Herstellung der erfindungsgemäßen kaschierten Prepregs bzw. der Doppellagen-Prepregs" kann mittels der bekannten Anlagen und Apparaturen gemäß Reaction Injection Moulding (RIM), Reinforced Reaction Injection Moulding (RRIM), Pultrusionsverfahren, durch Aufbringen der Lösung in einem Walzenstuhl oder mittels eines heissen Rakels, oder weiteren Verfahren durchgeführt werden.

Gegenstand der Erfindung ist auch die Verwendung der Prepregs insbesondere mit Faser förmigen Trägern aus Glas-, Kohle- oder Aramid-Fasern.

Gegenstand der Erfindung ist auch die Verwendung der erfindungsgemäßen Prepregs, zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Transportation, Construction, Medizintechnik, Sport, Elektro- und Elektronik-Industrie, Energieerzeugungsanlagen, z. B. für Rotorblätter bei Windkraftanlagen.

Gegenstand der Erfindung sind auch die nach dem erfindungsgemäßen Verfahren hergestellten Prepregs.

Gegenstand der Erfindung sind auch die aus den erfindungsgemäßen Prepregs hergestellten Composite-Bauteile.

Nachfolgend wird die Erfindung durch Beispiele erläutert.

### Beispiele

### Verwendete Glasfasergelege/-gewebe:

Folgende Glasfasergelege/-gewebe wurden in den Beispielen verwendet, Glasfilamentgewebe 296 g/m² - Atlas, Finish FK 144 (Interglas 92626)

### Herstellung des uretdionhaltigen Härters H:

119,1 g IPDI-Uretdion (Evonik Degussa GmbH) wurden in 100 ml Butylacetat gelöst und mit 27,5 g Methylpentandiol und 3,5 g Trimethylolpropan versetzt. Nach Zugabe von 0,01 g Dibutylzinndilaurat wurde 4 h unter Rühren auf 80 °C geheizt. Danach waren titrimetrisch keine freien NCO-Gruppen mehr zu detektieren. Der Härter H besitzt einen effektiven NCO-Latentgehalt von 12,8 Gew.-% (bezogen auf Feststoff).

### Reaktive Polyurethanzusammensetzung

Es wurden reaktive Polyurethanzusammensetzungen mit den folgenden Rezepturen zur Herstellung der Prepregs und der Composite verwendet.

| *Vergleichsbeispiel 1 (nicht erfindungsgemäß)* | | | |
|---|---|---|---|
| Härter H (60%-ig) (NCO-effektiv: 7,7%) | uretdiongruppenhaltige Härterkomponente a) | 25,5 Gew.-% | Evonik Industries |
| Uralac P1580 (OHZ 83 mg KOH/g) | Hydroxyl Polyester Harz b) | 34,7 Gew.-% | Cytec Industries Inc. |
| Molmasse ca. 1500 g/Mol Tg 51°C | | | |
| Benzoin | Entgasungsmittel | 0,2 Gew.-% | Aldrich |
| Butylacetat | Lösemittel c) | 39,8 Gew.-% | Fluka |

| *Beispiel 2 (erfindungsgemäß)* | | | |
|---|---|---|---|
| Härter H (60%-ig) (NCO-effektiv: 7,7%) | uretdiongruppenhaltige Härterkomponente a) | 65,3 Gew.-% | Evonik Industries |
| Polyol 4640 (OHZ 630 mg KOH/g) | Polyol b) | 10,9 Gew.-% | Perstorp |
| Molmasse 360 g/Mol flüssig | | | |
| Benzoin | Entgasungsmittel | 0,2 Gew.-% | Aldrich |
| Butylacetat | Lösemittel c) | 23,9 Gew.-% | Fluka |

| *Beispiel 3 (erfindungsgemäß)* | | | |
|---|---|---|---|
| Härter H (60%-ig) (NCO-effektiv: 7,7%) | uretdiongruppenhaltige Härterkomponente a) | 68,5 Gew.-% | Evonik Industries |
| Voranol 490 (OHZ 490 mg KOH/g) | Polyol b) | 13,9 Gew.-% | Dow |
| Molmasse 490 g/Mol flüssig | | | |
| Benzoin | Entgasungsmittel | 0,2 Gew.-% | Aldrich |
| Butylacetat | Lösemittel c) | 17,4 Gew.-% | Fluka |

| *Beispiel 4 (erfindungsgemäß)* | | | |
|---|---|---|---|
| katalysiert | | | |
| Härter H (60%-ig) (NCO-effektiv: 7,7%) | uretdiongruppenhaltige Härterkomponente a) | 60,1 Gew.-% | Evonik Industries |
| Polyol 4640 (OHZ 630 mg KOH/g) | | | |
| Molmasse 360 g/Mol flüssig | Polyol b) | 8,5 Gew.-% | Perstorp |
| Tetraethylammoniumbenzoat | Katalysator | 0,5 Gew.-% | Evonik Industries |
| Araldit PT 912 | Epoxid | 1,5 Gew.-% | Huntsman |
| Oxalsäure | Säure | 0,2 Gew.-% | Aldrich |
| Benzoin | Entgasungsmittel | 0,2 Gew.-% | Aldrich |
| Butylacetat | Lösemittel c) | 30,4 Gew.-% | Fluka |

Die Einsatzstoffe aus der Tabelle wurden in einem Vormischer innig vermischt und anschließend im angegebenen Lösemittel gelöst.
Zur Herstellung des Prepregs wurde das Glasfasergewebe mit der Lösung der Matrixmaterialien getränkt. Die Prepregs wurden im Ofen bei Temperaturen von 50 bis 70 °C, unter Anlegen von Vakuum bis zur Gewichtskonstanz getrocknet. Der Fasermassenanteil wurde im Vergleichsbeispiel 1 (10 Tests) zu 49 %, im Beispiel 2 (10 Tests) auf 55 % bestimmt, im Beispiel 3 auf 48 % (10 Tests) und im Beispiel 4 auf 52 % (10 Tests)
Das Prepreg des Vergleichsbeispiels 1 zeigte bei der Lösemittelentfernung vermutlich wegen der hohen Viskosität eine starke Blasenbildung, die zu einer sehr unregelmäßigen Oberfläche führte. Dieses Prepreg konnte daher nicht weiterverarbeitet werden.
Das erfindungsgemäße Prepreg des Beispiels 2 dagegen führte nach der Lösemittelentfernung zu einer geschlossenen Oberfläche ohne Blasenbildung. Dieses Prepreg ließ sich gut weiterverarbeiten. Das erfindungsgemäße Prepreg des Beispiels 3 führte nach der Lösemittelentfernung zu einer geschlossenen Oberfläche mit geringer Blasenbildung. Dieses Prepreg ließ sich gut weiterverarbeiten, allerdings nicht so gut wie Beispiel 2. Das erfindungsgemäße Prepreg des Beispiels 4 führte nach der Lösemittelentfernung zu einer geschlossenen Oberfläche ohne Blasenbildung. Dieses Prepreg ließ sich gut weiterverarbeiten.

DSC-Messungen
Die DSC-Untersuchungen (Glasübergangstemperatur-Bestimmungen und ReaktionsEnthalpie-Messungen) werden mit einem Mettler Toledo DSC 821e nach
DIN 53765 durchgeführt.

Die DSC Untersuchungen der Prepregs aus den Beispielen 1 bzw. 2 ergeben folgende Ergebnisse:

**Tab. 1: DSC-Untersuchungen vor und nach Lagerung bei 40°C**

| | VBsp.1 | Bsp.2 | Bsp.3 | Bsp. 4 |
|---|---|---|---|---|
| Exothermer Peak (1. Aufheizen) in °C | 200 | 203 | 196 | 174 |
| Exothermer Peak (1. Aufheizen) Reaktionsenthalpie in J/g | 36 | 95 | 103 | 39 |
| Tg (2. Aufheizen) in °C | 94 | 97 | 119 | 121 |
| Exothermer Peak (1. Aufheizen) in °C nach Lagerung 28 Tage bei 40°C | 203 | 202 | 198 | 180 |
| Exothermer Peak (1. Aufheizen) Reaktionsenthalpie in J/g nach Lagerung 28 Tage bei 40 °C | 33 | 90 | 98 | 51 |
| Tg (2. Aufheizen) in °C nach Lagerung 28 Tage bei 40 °C | 92 | 96 | 103 | 117 |

Die Glastemperaturen, die beim zweiten Aufheizen gemessen werden, sind die Glastemperaturen des abreagierten/vernetzten Matrixmaterials.

Die DSC-Untersuchungen der Prepregs aus den Beispielen 1, 2, 3 und 4 vor und nach Lagerung ist der Tabelle 1 zu entnehmen. Die gemessenen Reaktionsenthalpien der erfindungsgemäßen Prepregs der Beispiele 2, 3 und 4 nehmen im Verlauf der Lagerung nicht signifikant ab, was die Lagerstabilität des Matrixmaterials belegt.

### Composite-Bauteil-Herstellung

Die Composite-Bauteile wurden über eine dem Fachmann bekannte Presstechnik auf einer Composite-Presse hergestellt. Die mittels Direktimprägnierung hergestellten, homogenen Prepregs wurden an einer Tischpresse zu Verbundwerkstoffen verpresst. Bei dieser Tischpresse handelt es sich um die Polystat 200 T der Firma Schwabenthan, mit der die Prepregs bei Temperaturen zwischen 120 und 200 °C zu den entsprechenden Composite-Platten verpresst wurden. Der Druck wurde zwischen Normaldruck und 450 bar variiert.

In den erfindungsgemäßen Beispielen 2 und 3 wurde die Temperatur der Presse auf 150 °C eingestellt und im Verlauf der Verpressung auf 180 °C erhöht, der Druck wurde nach einer kurzen Aufschmelzphase von 3 Minuten auf 5 bar erhöht und bis zur Entnahme des Composite-Bauteils aus der Presse nach bis zu 30 Minuten gehalten. Die harten, steifen, chemikalienbeständigen und schlagzähen Composite-Bauteile (Plattenware) wurden hinsichtlich des Aushärtungsgrades (Bestimmung über DSC) untersucht. Bei der verwendeten Polyurethan-Zusammensetzung ist nach ca. 20 Minuten die Vernetzung vollständig, wobei dann auch keine Reaktionsenthalpie für die Vernetzungsreaktion mehr detektierbar ist.

In dem erfindungsgemäßen Beispiel 4 (katalysierte Variante) wurde die Temperatur der Presse auf 150 °C eingestellt und im Verlauf der Verpressung auf 180 °C erhöht, der Druck wurde nach einer kurzen Aufschmelzphase von 3 Minuten auf 5 bar erhöht und bis zur Entnahme des Composite-Bauteils aus der Presse nach bis zu 10 Minuten gehalten. Die harten, steifen, chemikalienbeständigen und schlagzähen Composite-Bauteile (Plattenware) wurden hinsichtlich des Aushärtungsgrades (Bestimmung über DSC) untersucht. Bei der verwendeten Polyurethan-Zusammensetzung ist nach ca. 20 Minuten die Vernetzung vollständig, wobei dann auch keine Reaktionsenthalpie für die Vernetzungsreaktion mehr detektierbar ist.

Das Prepreg des nicht erfindungsgemäßen Vergleichsbeispiels 1 konnte aufgrund der Blasenbildung nicht verpresst werden.

## Patentansprüche

1. Prepregs
im Wesentlichen aufgebaut aus
A) mindestens einem Faser förmigen Träger
und
B)
einem Matrixmaterial aus mindestens einer reaktiven Uretdiongruppen haltigen Polyurethanzusammensetzung B), im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltenden Polyisocyanaten und hydroxylgruppenhaltigen Verbindungen, wobei der Härter unterhalb von 40 °C in fester Form und oberhalb von 110 °C in flüssiger Form vorliegt, einen freien NCO-Gehalt von kleiner 5 Gew.-% und einen Uretdiongehalt von 3 - 25 Gew.-% aufweist,
b) mindestens eine hydroxylgruppenhaltige flüssige Harzkomponente b), wobei diese einen Tg oder einen Schmelzpunkt von kleiner 25 °C aufweist, und eine OH-Zahl zwischen 50 bis 2000 mg KOH / Gramm aufweist,
c) gegebenenfalls mindestens einen Katalysator,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,45 bis 0,55.

2. Prepregs nach Anspruch 1, **dadurch gekennzeichnet, dass** das Matrixmaterial B) flüssig, hoch viskos oder fest ist.

3. Prepregs nach mindestens einem der vorherigen Ansprüche,
**dadurch gekennzeichnet, dass** das Matrixmaterial B) einen Tg von mindestens 30 °C aufweist.

4. Prepregs nach mindestens einem der vorherigen Ansprüche,
**dadurch gekennzeichnet,**
**dass** Faser förmiges Material aus Glas, Kohlenstoff, Kunststoffen, wie Polyamid (Aramid) oder Polyester, Naturfasern, oder mineralischen Fasermaterialien wie Basaltfasern oder keramische Fasern enthalten ist.

5. Prepregs nach mindestens einem der vorherigen Ansprüche,
**dadurch gekennzeichnet,**
**dass** die reaktive Polyurethanzusammensetzung B) zusätzliche Katalysatoren enthält, bevorzugt Dibutylzinndilaurat, Zinkoctoat, Bismuthneodecanoat, und/oder tertiäre Amine, bevorzugt 1,4-Diazabicylco[2.2.2.]octan, in Mengen von 0,001 - 1 Gew.-%.

6. Prepregs, nach mindestens einem der Ansprüche 1 bis 4, mit mindestens einer hochreaktiven Uretdiongruppen haltigen Polyurethanzusammensetzung B) als Matrixmaterial, im Wesentlichen enthaltend
a) mindestens einen Uretdiongruppen haltigen Härter wie in Anspruch 1 definiert und
b) mindestens eine flüssige Harzkomponente b) wie in Anspruch 1 definiert;
c) 0,1 bis 5 Gew.-% mindestens eines Katalysators ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
und
d) 0,1 bis 5 Gew.-% mindestens eines Co-Katalysators, ausgewählt aus
d1) mindestens einem Epoxid
und/oder
d2) mindestens einem Metallacetylacetonat und/oder quarternären Ammoniumacetylacetonat und/oder quarternären Phosphoniumacetylacetonat;
e) gegebenenfalls aus der Polyurethanchemie bekannte Hilfs- und Zusatzstoffe.

7. Prepregs nach Anspruch 6, wobei die hochreaktive Uretdiongruppen haltige Polyurethanzusammensetzung B)
b) mindestens ein flüssiges Polyol, wobei dieses einen Tg oder einen Schmelzpunkt von kleiner 25 °C aufweist, und eine OH-Zahl zwischen 50 bis 2000, mg KOH / Gramm aufweist, enthält;
so dass die beiden Komponenten a) und b) in dem Verhältnis vorliegen, dass auf jede Hydroxylgruppe der Komponente b) 0,6 bis 0,9 Uretdiongruppe der Komponente a) entfällt.

8. Prepregs nach mindestens einem der vorherigen Ansprüche,
**dadurch gekennzeichnet,**
**dass** die Harzkomponente b) flüssig ist bei 20 bis 23 °C, besonders bevorzugt unter 20 °C.

9. Prepregs nach mindestens einem der vorherigen Ansprüche,
**dadurch gekennzeichnet,**
**dass** als mindestens eine flüssige Harzkomponente b) monomere Polyole, Polyester, Polycaprolactone, Polyether, Polyacrylate, Polycarbonate und Polyurethane mit einer OH-Zahl von 50 bis 2000 mg KOH/Gramm und einer mittleren Molmasse von 62 bis 3000 g/Mol, enthalten sind.

10. Prepregs nach mindestens einem der Ansprüche, wobei die Prepregs einen Faservolumenanteil von größer 10 %, bevorzugt von 50 - 70 %, besonders bevorzugt von 50 bis 65 %, aufweisen.

11. Prepregs nach mindestens einem der vorherigen Ansprüche,
im Wesentlichen aufgebaut aus
A) und B)
und
C) mindestens einer auf dem Prepreg durch die Polyurethanzusammensetzung B) fixierten Folie.

12. Verfahren zur Herstellung von Prepregs nach mindestens einem der Ansprüche 1 bis 11,
im Wesentlichen aufgebaut aus
A) mindestens einem Faser förmigen Träger
und
B) einem Matrixmaterial aus mindestens einer reaktiven Uretdiongruppen haltigen Polyurethanzusammensetzung B), im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltenden Polyisocyanaten und hydroxylgruppenhaltigen Verbindungen, wobei der Härter unterhalb von 40 °C in fester Form und oberhalb von 110 °C in flüssiger Form vorliegt, einen freien NCO-Gehalt von kleiner 5 Gew.-% und einen Uretdiongehalt von 3 - 25 Gew.-% aufweist,
b) mindestens eine hydroxylgruppenhaltige flüssige Harzkomponente b), wobei diese einen Tg oder einen Schmelzpunkt von kleiner 25 °C aufweist, und eine OH-Zahl zwischen 50 bis 2000 mg KOH / Gramm aufweist,
c) gegebenenfalls mindestens einen Katalysator,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,45 bis 0,55,
I. durch Herstellung der reaktiven Polyurethanzusammensetzung B),
und
II. Imprägnierung des Faser förmigen Träger A) mit der Polyurethanzusammensetzung B), welche optional gelöst in Lösemittel ist,
III. und gegebenenfalls Entfernen des Lösemittels.

13. Direkt-Schmelze-Imprägnierverfahren zur Herstellung von Prepregs nach mindestens einem der Ansprüche 1 bis 11,
im Wesentlichen aufgebaut aus
A) mindestens einem Faser förmigen Träger
und
B) einem Matrixmaterial aus mindestens einer reaktiven Uretdiongruppen haltigen Polyurethanzusammensetzung B), im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltenden Polyisocyanaten und hydroxylgruppenhaltigen Verbindungen, wobei der Härter unterhalb von 40 °C in fester Form und oberhalb von 110 °C in flüssiger Form vorliegt, einen freien NCO-Gehalt von kleiner 5 Gew.-% und einen Uretdiongehalt von 3 - 25 Gew.-% aufweist,
b) mindestens eine hydroxylgruppenhaltige flüssige Harzkomponente b), wobei diese einen Tg oder einen Schmelzpunkt von kleiner 25 °C aufweist, und eine OH-Zahl zwischen 50 bis 2000 mg KOH / Gramm aufweist,
c) gegebenenfalls mindestens einen Katalysator,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,45 bis 0,55;
I. durch Herstellung der reaktiven Polyurethanzusammensetzung B) in der Schmelze,
und
II. direkte Imprägnierung des Faser förmigen Trägers A) mit der Schmelze aus B).

14. Verwendung der Prepregs nach einem der Ansprüche 1 bis 11, mit Faser förmigen Trägern aus Glas-, Kohle- oder Aramid-Fasern
zur Herstellung von Composites im Boots- und Schiffbau, in der Luft- und Raumfahrtechnik, im Automobilbau, für Zweiräder bevorzugt Motorräder und Fahrräder, in den Bereichen Automotive, Transportation, Construction, Medizintechnik, Sport, Elektro- und Elektronik-Industrie, Energieerzeugungsanlagen, wie für Rotorblätter bei Windkraftanlagen.

15. Composite-Bauteile, hergestellt aus Prepregs nach mindestens einem der Ansprüche 1 bis 11.

16. Composite-Bauteile, hergestellt aus Prepregs nach mindestens einem der Ansprüche 1 bis 11, aufgebaut aus A) mindestens einem Faser förmigen Träger und B) mindestens einer vernetzten Polyurethanzusammensetzung, bevorzugt einer vernetzten Uretdiongruppen haltigen Polyurethanzusammensetzung.

## Claims

1. Prepregs
comprising
A) at least one fibrous support
and
B) a matrix material of at least one reactive polyurethane composition B) containing uretdione groups, essentially comprising
a) at least one curing agent containing uretdione groups, based on polyaddition compounds from aliphatic, (cyclo)aliphatic or cycloaliphatic polyisocyanates containing uretdione groups and hydroxyl group-containing compounds, where the curing agent exists in solid form below 40°C and in liquid form above 110°C, and has a free NCO content of less than 5 wt.% and a uretdione content of 3 - 25 wt.%,
b) at least one hydroxyl group-containing liquid resin component b) having a Tg or melting point below 25°C and an OH number between 50 and 2000 mg KOH/gram,
c) optionally at least one catalyst,
so that the two components a) and b) are present in a ratio such that there is from 0.3 to 1 uretdione group of component a) for each hydroxyl group of component b), preferably from 0.45 to 0.55.

2. Prepregs according to Claim 1, **characterized in that** the matrix material B) is a high-viscosity material or a liquid or solid.

3. Prepregs according to at least one of the previous claims, **characterized in that** the matrix material has a Tg of at least 30°C.

4. Prepregs according to at least one of the previous claims,
**characterized in that**
fibrous material of glass, carbon, plastics such as polyamide (aramid) or polyester, natural fibres or mineral fibre materials such as basalt fibres or ceramic fibres is contained.

5. Prepregs according to at least one of the previous claims,
**characterized in that**
the reactive polyurethane composition B) contains additional catalysts, preferably dibutyltin dilaurate, zinc octoate, bismuth neodecanoate, and/or tertiary amines, preferably 1,4-diazabicyclo[2.2.2]octane, in quantities from 0.001 - 1 wt.%.

6. Prepregs, according to at least one of Claims 1 to 4, with at least one polyurethane composition containing highly reactive uretdione groups B) as matrix material, essentially comprising
a) at least one curing agent containing uretdione groups as defined in Claim 1
and
b) at least one liquid resin component b) as defined in Claim 1;
c) 0.1 to 5 wt.% of at least one catalyst selected from quaternary ammonium salts and/or quaternary phosphonium salts with halogens, hydroxides, alcoholates or organic or inorganic acid anions as the counter-ion;
and
d) 0.1 to 5 wt.% of at least one cocatalyst, selected from
d1) at least one epoxide
and/or
d2) at least one metal acetylacetonate and/or quaternary ammonium acetylacetonate and/or quaternary phosphonium acetylacetonate;
e) optionally auxiliary substances and additives known from polyurethane chemistry.

7. Prepregs according to Claim 6, wherein the highly reactive polyurethane composition B) containing uretdione groups comprises
b) at least one liquid polyol having a Tg or melting point below 25°C and an OH number between 50 and 2000 mg KOH/gram;
so that the two components a) and b) are present in a ratio such that there is from 0.6 to 0.9 uretdione group of component a) for each hydroxyl group of component b).

8. Prepregs according to at least one of the preceding claims,
**characterized in that**
the resin component b) is liquid at from 20 to 23°C, and particularly preferably below 20°C.

9. Prepregs according to at least one of the preceding claims,
**characterized in that**
monomeric polyols, polyesters, polycaprolactones, polyethers, polyacrylates, polycarbonates and polyurethanes with an OH number of 50 to 2000 mg KOH/gram and with an average molar mass of 62 to 3000 g/mol are present as at least one liquid resin component b).

10. Prepregs according to at least one of the claims, which have a fibre volume content of more than 10%, preferably of 50 - 70%, particularly preferably of 50 to 65%.

11. Prepregs according to at least one of the preceding claims,
consisting essentially of
A) and B)
and
C) at least one foil fixed on the prepreg via the polyurethane composition B).

12. Process for the production of prepregs according to at least one of Claims 1 to 11,
consisting essentially of
A) at least one fibrous support
and
B) a matrix material of at least one reactive polyurethane composition B) containing uretdione groups, essentially comprising
a) at least one curing agent containing uretdione groups, based on polyaddition compounds from aliphatic, (cyclo)aliphatic or cycloaliphatic polyisocyanates containing uretdione groups and hydroxyl group-containing compounds, where the curing agent exists in solid form below 40°C and in liquid form above 110°C, and has a free NCO content of less than 5 wt.% and a uretdione content of 3 - 25 wt.%,
b) at least one hydroxyl group-containing liquid resin component b) having a Tg or melting point below 25°C and an OH number between 50 and 2000 mg KOH/gram,
c) optionally at least one catalyst,
so that the two components a) and b) are present in a ratio such that there is from 0.3 to 1 uretdione group of component a) for each hydroxyl group of component b), preferably from 0.45 to 0.55,
I. by production of the reactive polyurethane composition B),
and
II. impregnation of the fibrous support A) with the polyurethane composition B), which has optionally been dissolved in solvent,
III. and optional removal of the solvent.

13. Direct melt impregnation process for the production of prepregs according to at least one of Claims 1 to 11,
consisting essentially of
A) at least one fibrous support
and
B) a matrix material of at least one reactive polyurethane composition B) containing uretdione groups, essentially comprising
a) at least one curing agent containing uretdione groups, based on polyaddition compounds from aliphatic, (cyclo)aliphatic or cycloaliphatic polyisocyanates containing uretdione groups and hydroxyl group-containing compounds, where the curing agent exists in solid form below 40°C and in liquid form above 110°C, and has a free NCO content of less than 5 wt.% and a uretdione content of 3 - 25 wt.%,
b) at least one hydroxyl group-containing liquid resin component b) having a Tg or melting point below 25°C and an OH number between 50 and 2000 mg KOH/gram,
c) optionally at least one catalyst,
so that the two components a) and b) are present in a ratio such that there is from 0.3 to 1 uretdione group of component a) for each hydroxyl group of component b), preferably from 0.45 to 0.55;
I. by production of the reactive polyurethane composition B) in the melt,
and
II. direct impregnation of the fibrous support A) with the melt from B).

14. Use of the prepregs according to one of Claims 1 to 11, with fibrous supports of glass, carbon or aramid fibres for the production of composites in boat and shipbuilding, in aerospace technology, in automobile manufacture, and for bicycles, preferably motorcycles and cycles, and in the sectors automotive, transportation, construction, medical engineering, sport, electrical and electronics industry, and power generating plants, e.g. for rotor blades in wind power plants.

15. Composite components, produced from prepregs according to at least one of Claims 1 to 11.

16. Composite components produced from prepregs according to at least one of Claims 1 to 11, made up of A) at least one fibrous support and B) at least one crosslinked polyurethane composition, preferably a crosslinked polyurethane composition containing uretdione groups.

## Revendications

1. Préimprégnés essentiellement formés par :
A) au moins un support fibreux
et
B) un matériau de matrice en au moins une composition de polyuréthane B) réactive contenant des groupes uretdione, contenant essentiellement :
a) au moins un durcisseur contenant des groupes uretdione, à base de composés de polyaddition de polyisocyanates contenant des groupes uretdione aliphatiques, (cyclo)aliphatiques ou cycloaliphatiques et de composés contenant des groupes hydroxyle, le durcisseur se présentant sous forme solide en dessous de 40 °C et sous forme liquide au-dessus de 110 °C, présentant une teneur en NCO libre inférieure à 5 % en poids et une teneur en uretdione de 3 à 25 % en poids,
b) au moins un composant résine liquide b) contenant des groupes hydroxyle, celui-ci présentant une Tg ou un point de fusion inférieur à 25 °C, et présentant un indice OH compris entre 50 et 2 000 mg de KOH/gramme,
c) éventuellement au moins un catalyseur,
de telle sorte que les deux composants a) et b) soient présents en un rapport tel que 0,3 à 1 groupe uretdione du composant a), de préférence 0,45 à 0,55, soit présent pour chaque groupe hydroxyle du composant b).

2. Préimprégnés selon la revendication 1, **caractérisés en ce que** le matériau de matrice B) est liquide, hautement visqueux ou solide.

3. Préimprégnés selon au moins l'une quelconque des revendications précédentes, **caractérisés en ce que** le matériau de matrice B) présente une Tg d'au moins 30 °C.

4. Préimprégnés selon au moins l'une quelconque des revendications précédentes, **caractérisés en ce qu'**un matériau fibreux en verre, en carbone, en matières plastiques, telles que le polyamide (aramide) ou le polyester, en fibres naturelles, ou un matériau fibreux minéral tel que des fibres de basalte ou des fibres céramiques, est contenu.

5. Préimprégnés selon au moins l'une quelconque des revendications précédentes, **caractérisés en ce que** la composition de polyuréthane réactive B) contient des catalyseurs supplémentaires, de préférence le dilaurate de dibutylétain, l'octoate de zinc, le néodécanoate de bismuth, et/ou des amines tertiaires, de préférence le 1,4-diazabicyclo[2.2.2.]octane, en quantités de 0,001 à 1 % en poids.

6. Préimprégnés selon au moins l'une quelconque des revendications 1 à 4, contenant au moins une composition de polyuréthane hautement réactive contenant des groupes uretdione B) en tant que matériau de matrice, contenant essentiellement :
a) au moins un durcisseur contenant des groupes uretdione tel que défini dans la revendication 1, et
b) au moins un composant résine liquide b) tel que défini dans la revendication 1,
c) 0,1 à 5 % en poids d'au moins un catalyseur choisi parmi les sels d'ammonium quaternaires et/ou les sels de phosphonium quaternaires avec des halogènes, des hydroxydes, des alcoolates ou des anions acides organiques ou inorganiques en tant que contre-ion ;
et
d) 0,1 à 5 % en poids d'au moins un co-catalyseur, choisi parmi :
d1) au moins un époxyde
et/ou
d2) au moins un acétylacétonate de métal et/ou un acétylacétonate d'ammonium quaternaire et/ou un acétylacétonate de phosphonium quaternaire ;
e) éventuellement des adjuvants et additifs connus dans la chimie des polyuréthanes.

7. Préimprégnés selon la revendication 6, dans lesquels la composition de polyuréthane hautement réactive contenant des groupes uretdione B) contient :
b) au moins un polyol liquide, celui-ci présentant une Tg ou un point de fusion inférieur à 25 °C, et présentant un indice OH compris entre 50 et 2 000 mg de KOH/gramme ;
de telle sorte que les deux composants a) et b) soient présents en un rapport tel que 0,6 à 0,9 groupe uretdione du composant a) soit présent pour chaque groupe hydroxyle du composant b).

8. Préimprégnés selon au moins l'une quelconque des revendications précédentes, **caractérisés en ce que** le composant résine b) est liquide à 20 à 23 °C, de manière particulièrement préférée en dessous de 20 °C.

9. Préimprégnés selon au moins l'une quelconque des revendications précédentes, **caractérisés en ce que** des polyols monomères, des polyesters, des polycaprolactones, des polyéthers, des polyacrylates, des polycarbonates et des polyuréthanes ayant un indice OH de 50 à 2 000 mg de KOH/gramme et présentant une masse molaire moyenne de 62 à 3 000 g/mol, sont contenus en tant qu'au moins un composant résine liquide b).

10. Préimprégnés selon au moins l'une quelconque des revendications précédentes, dans lesquels les préimprégnés présentent une proportion volumique de fibres supérieure à 10 %, de préférence de 50 à 70 %, de manière particulièrement préférée de 50 à 65 %.

11. Préimprégnés selon au moins l'une quelconque des revendications précédentes, essentiellement formés par
A) et B)
et
C) au moins un film fixé sur le préimprégné par la composition de polyuréthane B).

12. Procédé de fabrication de préimprégnés selon au moins l'une quelconque des revendications 1 à 11, essentiellement formés par :
A) au moins un support fibreux,
et
B) un matériau de matrice en au moins une composition de polyuréthane réactive B) contenant des groupes uretdione, contenant essentiellement :
a) au moins un durcisseur contenant des groupes uretdione, à base de composés de polyaddition de polyisocyanates contenant des groupes uretdione aliphatiques, (cyclo)aliphatiques ou cycloaliphatiques et de composés contenant des groupes hydroxyle, le durcisseur se présentant sous forme solide en dessous de 40 °C et sous forme liquide au-dessus de 110 °C, présentant une teneur en NCO libre inférieure à 5 % en poids et une teneur en uretdione de 3 à 25 % en poids,
b) au moins un composant résine liquide b) contenant des groupes hydroxyle, celui-ci présentant une Tg ou un point de fusion inférieur à 25 °C, et présentant un indice OH compris entre 50 et 2 000 mg de KOH/gramme,
c) éventuellement au moins un catalyseur,
de telle sorte que les deux composants a) et b) soient présents en un rapport tel que 0,3 à 1 groupe uretdione du composant a), de préférence 0,45 à 0,55, soit présent pour chaque groupe hydroxyle du composant b),
I. par fabrication de la composition de polyuréthane réactive B) et
II. imprégnation du support fibreux A) avec la composition de polyuréthane B), qui est éventuellement dissoute dans un solvant,
III. et éventuellement élimination du solvant.

13. Procédé d'imprégnation direct à l'état fondu pour la fabrication de préimprégnés selon au moins l'une quelconque des revendications 1 à 11, essentiellement formés par :
A) au moins un support fibreux,
et
B) un matériau de matrice en au moins une composition de polyuréthane réactive B) contenant des groupes uretdione, contenant essentiellement :
a) au moins un durcisseur contenant des groupes uretdione, à base de composés de polyaddition de polyisocyanates contenant des groupes uretdione aliphatiques, (cyclo)aliphatiques ou cycloaliphatiques et de composés contenant des groupes hydroxyle, le durcisseur se présentant sous forme solide en dessous de 40 °C et sous forme liquide au-dessus de 110 °C, présentant une teneur en NCO libre inférieure à 5 % en poids et une teneur en uretdione de 3 à 25 % en poids,
b) au moins un composant résine liquide b) contenant des groupes hydroxyle, celui-ci présentant une Tg ou un point de fusion inférieur à 25 °C, et présentant un indice OH compris entre 50 et 2 000 mg de KOH/gramme,
c) éventuellement au moins un catalyseur,
de telle sorte que les deux composants a) et b) soient présents en un rapport tel que 0,3 à 1 groupe uretdione du composant a), de préférence 0,45 à 0,55, soit présent pour chaque groupe hydroxyle du composant b),
I. par fabrication de la composition de polyuréthane réactive B) à l'état fondu, et
II. imprégnation directe du support fibreux A) avec la masse fondue de B).

14. Utilisation des préimprégnés selon l'une quelconque des revendications 1 à 11 avec des supports fibreux en fibres de verre, de carbone ou d'aramide, pour la fabrication de composites dans la construction de navires et de bateaux, dans la technologie aérospatiale et astronautique, dans la construction d'automobiles, pour des deux-roues, de préférence des motos et des vélos, dans les domaines de l'automobile, du transport, du bâtiment, de la technologie médicale, du sport, dans l'industrie électrique et électronique, dans les installations de génération d'énergie, par exemple pour des pales de rotor d'éoliennes.

15. Composants composites, fabriqués à partir de préimprégnés selon au moins l'une quelconque des revendications 1 à 11.

16. Composants composites, fabriqués à partir de préimprégnés selon au moins l'une quelconque des revendications 1 à 11, formés par A) au moins un support fibreux et B) au moins une composition de polyuréthane réticulée, de préférence une composition de polyuréthane réticulée contenant des groupes uretdione.
